# EUROPÄISCHE PATENTANMELDUNG

(11) **EP 3 381 560 A1**
(43) Veröffentlichungstag der Anmeldung: **03.10.2018**
(21) Anmeldenummer: 17163424.9
(22) Anmeldetag: 28.03.2017
(51) Int. Cl.: B01L 3/02, G01N 35/10

(54) **VERFAHREN UND DOSIERVORRICHTUNG ZUM KONTAKTDOSIEREN VON FLÜSSIGKEITEN**

(71) Anmelder: Eppendorf AG, 22339 Hamburg (DE)
(72) Erfinder: Göcke, Rusbeh, 22335 Hamburg (DE)
(74) Vertreter: Hauck Patentanwaltspartnerschaft mbB

(57) **Zusammenfassung**

Verfahren zum Kontaktdosieren von Flüssigkeiten umfassend die folgenden Schritte:
• mindestens ein länglicher Hohlkörper wird mit seinem unteren Ende in eine erste Flüssigkeit in einem Quellgefäß eingetaucht,
• in den länglichen Hohlkörper wird erste Flüssigkeit eingesogen, wobei das Volumen der eingesogenen ersten Flüssigkeit mindestens ein definiertes Dosiervolumen umfasst,
• der längliche Hohlkörper mit der darin enthaltenen ersten Flüssigkeit wird aus dem Quellgefäß entnommen,
• ein Teil der in den länglichen Hohlkörper enthaltenen ersten Flüssigkeit wird als Kontaktierungsvolumen aus dem unteren Ende des länglichen Hohlkörpers herausgedrückt, sodass das Kontaktierungsvolumen einen am unteren Ende des länglichen Hohlkörpers anhängenden Tropfen bildet,
• zumindest ein Teil des Tropfens wird in eine zweite Flüssigkeit in einem Zielgefäß eingetaucht und
• das definierte Dosiervolumen bestehend aus dem Kontaktierungsvolumen und einem in dem länglichen Hohlkörper enthaltenen Restvolumen wird in die zweite Flüssigkeit abgegeben.

## Beschreibung

Die Erfindung betrifft ein Verfahren zum Kontaktdosieren von Flüssigkeiten und eine Dosiervorrichtung zum Kontaktdosieren von Flüssigkeiten.

Das Kontaktdosieren von Flüssigkeiten wird insbesondere in medizinischen, biologischen, biochemischen und chemischen Laboratorien angewandt.

Beim Kontaktdosieren wird mittels einer Pipettenspitze, einem zylindrischen Röhrchen oder einem anderen länglichen Hohlkörper mit einer unteren und einer oberen Öffnung eine erste Flüssigkeit einem Quellgefäß entnommen, der längliche Hohlkörper in eine zweite Flüssigkeit in einem Zielgefäß eingetaucht und die erste Flüssigkeit aus dem länglichen Hohlkörper in die zweite Flüssigkeit im Zielgefäß abgegeben. Beim Dispensieren (engl.: *multidispense*) wird eine hinreichende Menge erster Flüssigkeit in den länglichen Hohlkörper aufgenommen, sodass sie in mehreren Teilen in mehrere Zielgefäße abgegeben werden kann. Beim Diluieren wird zwischen Teilen der ersten Flüssigkeit ein Luftpolster in den länglichen Hohlkörper eingesogen, sodass nach der Abgabe jedes Teils der ersten Flüssigkeit ein Rest mittels eines Luftpolsters ausgeblasen werden kann. Beim Pipettieren wird die gesamte, von dem länglichen Hohlkörper aufgenommene Flüssigkeit in ein einziges Zielgefäß abgegeben. In der Regel sind die erste Flüssigkeit und die zweite Flüssigkeit verschiedene Flüssigkeiten.

Bei Pipettenspitzen handelt es sich um Röhrchen, die an einer oberen Öffnung an einer Dosiervorrichtung gehalten werden und meistens eine konische Form aufweisen. Durch eine untere Öffnung des Röhrchens hindurch wird Flüssigkeit aufgenommen und abgegeben. Pipettenspitzen aus Kunststoff sind nach Gebrauch austauschbar, um Verschleppungen zu vermeiden, beispielsweise bei einem Wechsel der ersten oder zweiten Flüssigkeit. Pipettenspitzen aus Kunststoff werden an ihrer oberen Öffnung auf einen Ansatz der Dosiervorrichtung aufgeklemmt oder mit ihrem oberen Ende in eine Sackbohrung der Dosiervorrichtung eingeklemmt. Ferner sind Pipettenspitzen aus Glas oder Metall bekannt, die für Wiederverwendung bestimmt sind. Zylindrische Röhrchen aus Metall sind für dauerhafte Verwendung bestimmt und müssen zur Vermeidung von Verschleppungen gereinigt werden. Zum Einsaugen von Flüssigkeit in den länglichen Hohlkörper hinein und Ausstoßen aus diesem heraus werden Luftpolstersysteme oder Direktverdrängersysteme verwendet. Bei Luftpolstersystemen wird mittels eines in einem Zylinder verlagerbaren Kolbens oder einer anderen Verdrängungseinrichtung ein Luftpolster in den länglichen Hohlkörper verlagert. Bei Direktverdrängersystemen wird in dem länglichen Hohlkörper ein Kolben verlagert, der direkt in Kontakt mit der Flüssigkeit in dem länglichen Hohlkörper kommt. Bekannt sind insbesondere Pipettenspitzen mit einem Röhrchen aus Kunststoff oder Glas und einem Kolben aus Metall oder Kunststoff.

Beim Einsaugen der ersten Flüssigkeit werden zusätzlich zu dem mindestens einen Dosiervolumen ein Umkehrhubvolumen und ein Resthubvolumen aufgenommen. Nach Aufnahme der ersten Flüssigkeit führt der Kolben einen Umkehrhub durch, wobei das Umkehrhubvolumen im Freistrahl aus dem länglichen Hohlkörper in das Quellgefäß zurückgegeben wird. Hierdurch kann ein Spiel in der Antriebsmechanik der Dosiervorrichtung überwunden werden, sodass dieses bei der nachfolgenden Abgabe des Dosiervolumens keine Rolle spielt. Das Resthubvolumen wird nach der Abgabe sämtliche Dosiervolumen aus dem länglichen Hohlkörper im Freistrahl in das Quellgefäß abgegeben. Das Resthubvolumen stellt sicher, dass eine hinreichende Menge Flüssigkeit für die Abgabe des mindestens einen definierten Dosiervolumens in dem länglichen Hohlkörper vorhanden ist.

Die Kontaktdosierung ermöglicht eine präzise Abgabe kleiner Flüssigkeitsmengen. Nachteilig ist, dass beim Dispensieren Flüssigkeit zwischen den Zielgefäßen verschleppt werden kann. Diesen Nachteil weist die Dosierung im Freistrahl nicht auf, bei der die Flüssigkeit aus der unteren Öffnung des länglichen Hohlkörpers in einem Freistrahl in das Zielgefäß hinein abgegeben wird, ohne dass der längliche Hohlkörper in die zweite Flüssigkeit eintaucht. Die Dosierung im Freistrahl ist jedoch insbesondere bei kleineren Dosiervolumen weniger präzise.

Beim Kontaktdispensieren fällt die Präzision bei Dosiervolumen unterhalb 1 µl stark ab und beim Kontaktpipettieren fällt die Präzision bei Dosiervolumen unterhalb 0,2 µl stark ab.

Die US 2012/180579 A1 und die US 4,917,274A beschreiben spezielle geometrische Ausgestaltungen von Pipettenspitzen zum Zwecke der Abgabe von geringen Dosiervolumen.

Davon ausgehend liegt der Erfindung die Aufgabe zugrunde, ein Verfahren und eine Vorrichtung zum Kontaktdosieren von Flüssigkeiten zu schaffen, das bzw. die eine deutliche Reduzierung des sicher beherrschbaren Dosiervolumens und eine deutliche Erhöhung der Präzision bei herkömmlicherweise sicher beherrschbarem Dosiervolumen ermöglicht.

Erfindungsgemäß wird die Aufgabe gelöst durch ein Verfahren zum Kontaktdosieren von Flüssigkeiten gemäß Anspruch 1. Vorteilhafte Ausgestaltungen des Verfahrens sind in Unteransprüchen angegeben.
Das erfindungsgemäße Verfahren zum Kontaktdosieren von Flüssigkeiten, umfasst die folgenden Schritte:
   - mindestens ein länglicher Hohlkörper wird mit seinem unteren Ende in eine erste Flüssigkeit in einem Quellgefäß eingetaucht,
   - in den länglichen Hohlkörper wird erste Flüssigkeit eingesogen, wobei das Volumen der eingesogenen ersten Flüssigkeit mindestens ein definiertes Dosiervolumen umfasst,
   - der längliche Hohlkörper mit der darin enthaltenen ersten Flüssigkeit wird aus dem Quellgefäß entnommen,
   - ein Teil der in den länglichen Hohlkörper enthaltenen ersten Flüssigkeit wird als Kontaktierungsvolumen aus dem unteren Ende der Pipettenspitze herausgedrückt, sodass das Kontaktierungsvolumen einen am unteren Ende der Pipettenspitze anhängenden Tropfen bildet,
   - zumindest ein Teil des Tropfens wird in eine zweite Flüssigkeit in einem Zielgefäß eingetaucht und
   - das definierte Dosiervolumen bestehend aus dem Kontaktierungsvolumen und einem in dem länglichen Hohlkörper enthaltenen Restvolumen wird in die zweite Flüssigkeit abgegeben.

Bei dem erfindungsgemäßen Verfahren wird das mittels des länglichen Hohlkörpers abzugebende definierte Dosiervolumen (Sollvolumen) aufgeteilt in ein Kontaktierungsvolumen und in ein Restvolumen. Das Kontaktierungsvolumen wird vor dem Eintauchen in die zweite Flüssigkeit aus dem länglichen Hohlkörper herausgedrückt, sodass es einen am unteren Ende des länglichen Hohlkörpers anhängenden Tropfen bildet. Danach wird zumindest ein Teil des Tropfens in die zweite Flüssigkeit im Zielgefäß eingetaucht und das gesamte Dosiervolumen bestehend aus Kontaktierungsvolumen und Restvolumen in die zweite Flüssigkeit abgegeben. Überraschenderweise hat sich gezeigt, dass auf diese Weise kleinere Dosiervolumen als beim herkömmlichen Kontaktdosieren sicher beherrschbar sind. Hierbei handelt es sich beim Kontaktdispensieren um Dosiervolumen unter der bislang beherrschten Untergrenze von 1,0 µl und beim Kontaktpipettieren um Dosiervolumen unter der bislang beherrschbaren Untergrenze von 0,2 µl. Zudem kann die Präzision bei Abgabe von Dosiervolumen von 1 µl und darüber beim Kontaktdispensieren bzw. 0,2 µl und darüber beim Kontaktpipettieren erhöht werden.

Bei einer Dosiervorrichtung mit einer von einem Elektromotor angetriebenen Verdrängungseinrichtung und einer programmgesteuerten elektrischen Steuerungseinrichtung (z.B. einem Mikrorechner) zum Steuern des elektrischen Antriebsmotors ist das Verfahren einfach durch Programmieren der Steuerungseinrichtung implementierbar. Hierfür geeignete Dosiervorrichtungen sind bekannt. Die Erfindung eignet sich sowohl für die einfache Nachrüstung bekannter als auch für die Ausbildung neuer Dosiervorrichtungen.

Interne Analysen der Anmelderin im Rahmen der Erfindung haben ergeben, dass es beim herkömmlichen Dispensieren im Kontakt ohne Kontaktierungsvolumen bei aufeinanderfolgenden Abgaben in Ausnahmefällen abwechselnd zu einer das Dosiervolumen unterschreitenden Minderabgabe und einer das Dosiervolumen überschreitenden Mehrabgabe kommt. Die Anmelderin hat erkannt, dass bei der abwechselnden Minderabgabe und Mehrabgabe das fehlende Volumen einer Minderabgabe als Tropfen an der Unterseite des länglichen Hohlkörpers verbleibt und bei der nachfolgenden Mehrabgabe als zusätzliches Volumen mit abgegeben wird. Die erfolgreiche Abgabe des Dosiervolumens wurde von der Anmelderin auf den anhängenden Tropfen zurückgeführt. Gemäß einer weiterführenden Überlegung der Anmelderin wird das Dosiervolumen von vornherein auf einen anhängenden Tropfen mit dem Kontaktierungsvolumen und auf ein in den länglichen Hohlkörper angeordnetes Restvolumen aufgeteilt. Die Richtigkeit der Vermutung, dass hierdurch kleine Dosiervolumen beherrschbar und die Präzision herkömmlicher Dosiervolumen verbessert wird, wurde experimentell bestätigt. Die Ursachen für den beschriebenen Effekt sind noch nicht abschließend geklärt. Nach dem derzeitigen Stand der Überlegungen wird die herkömmliche Kontaktdosierung von Flüssigkeit durch die Auftriebskraft einer beim Eintauchen in die zweite Flüssigkeit an der unteren Öffnung des länglichen Hohlkörpers verbleibenden Blase und durch Grenzflächeneffekte zwischen länglichem Hohlkörper, erster und zweiter Flüssigkeit beeinträchtigt. Die erfindungsgemäße Kontaktdosierung vermeidet die störenden Einflüsse.

In der vorliegenden Anmeldung bezeichnet "Präzision" die Präzision gemäß ISO 35 34-1 und 5725-1.

Gemäß einer Ausführungsart der Erfindung sind die erste Flüssigkeit und die zweite Flüssigkeit verschiedene Flüssigkeiten. Gemäß einer anderen Ausführungsart sind die erste Flüssigkeit und die zweite Flüssigkeit dieselben Flüssigkeiten.

Mit dem Begriff Flüssigkeit sind in dieser Anmeldung flüssige Stoffe und flüssige Stoffgemische bezeichnet. Gemäß einer bevorzugten Ausführungsart sind die Stoffgemische Lösungen. Gemäß einer weiteren Ausführungsart sind die Stoffgemische mehrphasige Stoffgemische, wobei eine oder mehrere Phasen flüssig sind. Gemäß einer weiteren Ausführungsart sind die mehrphasigen Stoffgemische Emulsionen oder Suspensionen.

Der längliche Hohlkörper weist eine untere und eine obere Öffnung auf, wobei durch die untere Öffnung hindurch Flüssigkeit oder Gas eingesogen oder ausgestoßen wird. Die Bezeichnungen "untere Öffnung" und "obere Öffnung" beruhen darauf, dass der längliche Hohlkörper bei der Aufnahme von Flüssigkeit so ausgerichtet wird, dass sich die "untere Öffnung" unten und die "obere Öffnung" oben befindet, d.h. höher als die "untere Öffnung" angeordnet ist. Bei Luftpolstersystemen wird die obere Öffnung mit einer Verdrängungseinrichtung verbunden und bei Direktverdrängersystemen wird ein im Hohlkörper angeordneter Kolben mittels einer zur oberen Öffnung hin oder durch diese hindurch erstreckten Kolbenstange im Hohlkörper verlagert.

Gemäß einer weiteren Ausführungsart ist der längliche Hohlkörper eine Pipettenspitze. Gemäß einer bevorzugten Ausführungsart ist die Pipettenspitze eine Pipettenspitze aus Kunststoff, aus Glas oder aus Metall. Gemäß einer weiteren Ausführungsart hat die Pipettenspitze eine konische und/oder zylindrische Form. Gemäß einer weiteren Ausführungsart ist der längliche Hohlkörper ein (kreis-)zylindrisches Röhrchen z.B. aus Metall, eine Kapillare z.B. aus Glas oder ein Schlauch z.B. aus Silikon oder einem anderen biegsamen, vorzugsweise weichelastischen Material. Gemäß einer weiteren Ausführungsart hat das (kreis-)zylindrische Röhrchen am unteren Ende eine Spitze, z.B. um eine Gefäßabdeckung zu durchstoßen. Diese Ausführungsart wird auch als "hohle Nadel" bezeichnet. Zylindrische Röhrchen z.B. aus Metall sind beispielsweise durch Verschrauben an der Dosiervorrichtung befestigt und können hierfür am oberen Ende ein Außengewinde aufweisen. Gemäß einer weiteren Ausführungsart ist der längliche Hohlkörper eine Pipettenspitze aus Kunststoff, Glas oder Metall und der Kolben ein Kolben aus Kunststoff oder Metall.

Das Quellgefäß ist gemäß einer bevorzugten Ausführungsart ein Reservoir, Reagenzgefäß oder eine Mikrotiterplatte. Das Zielgefäß ist gemäß einer bevorzugten Ausführungsart ein Reagenzgefäß oder eine Mikrotiterplatte.

Gemäß einer weiteren Ausführungsart wird in den länglichen Hohlkörper erste Flüssigkeit eingesogen, welche mindestens ein definiertes Dosiervolumen, ein Umkehrhubvolumen und ein Restabgabevolumen umfasst. Das Umkehrhubvolumen dient dazu, einen Umkehrhub auszuführen, um einen Einfluss eines Spiels in der Antriebsmechanik der Verdrängungseinrichtung einer Dosiervorrichtung auf das abgegebene Dosiervolumen zu eliminieren. Durch das Restabgabevolumen wird gesichert, dass eine hinreichende Menge erster Flüssigkeit für die Abgabe des definierten Dosiervolumens in den länglichen Hohlkörper eingesogen wird.

Gemäß einer weiteren Ausführungsart wird in den länglichen Hohlkörper vor dem Einsaugen erster Flüssigkeit und wenn sein unteres Ende nicht in die erste Flüssigkeit eingetaucht ist ein Unterhubvolumen Luft eingesogen und wird nach der Abgabe des definierten Dosiervolumens und Entnehmen des unteren Endes des länglichen Hohlkörpers aus der zweiten Flüssigkeit das Unterhubvolumen Luft aus dem länglichen Hohlkörper ausgeblasen, um Reste erster Flüssigkeit aus dem länglichen Hohlkörper zu entfernen. Dies ist sowohl beim Pipettieren als auch beim Dispensieren und Diluieren vorteilhaft.

Gemäß einer weiteren Ausführungsart wird Flüssigkeit mittels nur eines einzigen länglichen Hohlkörpers dosiert. Gemäß einer anderen Ausführungsart wird Flüssigkeit gleichzeitig mittels mehrerer länglicher Hohlkörper dosiert, beispielsweise mittels 8, 12, 16, 24, 48 oder 96 länglicher Hohlkörper. Die gleichzeitige Dosierung mittels einer Vielzahl länglicher Hohlkörper kann mittels Mehrkanaldosiervorrichtungen erfolgen. Dosiervorrichtungen mit Dosierköpfen für eine Vielzahl Pipettenspitzen oder hohler Nadeln sind bekannt.

Gemäß einer weiteren Ausführungsart wird der längliche Hohlkörper nach der Aufnahme der ersten Flüssigkeit vom Quellgefäß weg zum Zielgefäß hin verlagert und der Tropfen am unteren Ende des länglichen Hohlkörpers gebildet, wenn sich der längliche Hohlkörper näher am Zielgefäß als am Quellgefäß befindet. Dadurch, dass der Tropfen erst dann gebildet wird, wenn sich der längliche Hohlkörper näher am Zielgefäß als am Quellgefäß befindet, wird einem Verdunsten erster Flüssigkeit und einem Verlust des Tropfens beim Transport mittels des länglichen Hohlkörpers entgegengewirkt. Vorzugsweise wird der Tropfen so spät wie möglich vor dem Eintauchen in die zweite Flüssigkeit am unteren Ende des länglichen Hohlkörpers ausgebildet.

Gemäß einer weiteren Ausführungsart wird nach dem Entnehmen des länglichen Hohlkörpers aus dem Quellgefäß die erste Flüssigkeit in den länglichen Hohlkörper zurückgezogen und danach der Tropfen am unteren Ende des länglichen Hohlkörpers ausgebildet. Durch das Zurückziehen der Flüssigkeit in den länglichen Hohlkörper werden die Verdunstung der ersten Flüssigkeit und das Risiko eines Verlustes erster Flüssigkeit beim Transport weiter reduziert.

Gemäß einer weiteren Ausführungsart wird nur ein einziges definiertes Dosiervolumen abgegeben. Gemäß dieser Ausführungsart wird das Verfahren für das Pipettieren verwendet. Das Verfahren kann beliebig oft wiederholt werden, um mehrere Pipettierungen durchzuführen.

Gemäß einer anderen Ausführungsart wird nach der Abgabe des definierten Dosiervolumens der längliche Hohlkörper aus dem Zielgefäß entnommen, ein Tropfen mit dem Kontaktierungsvolumen am unteren Ende des länglichen Hohlkörpers gebildet, zumindest ein Teil des Tropfens in eine zweite Flüssigkeit in einem anderen Zielgefäß eingetaucht und das definierte Dosiervolumen bestehend aus dem Kontaktierungsvolumen und einem in den länglichen Hohlkörper vorhandenen Restvolumen in die zweite Flüssigkeit im anderen Zielgefäß abgegeben. Gemäß dieser Ausführungsart wird das Verfahren für das Dispensieren verwendet. Gemäß einer bevorzugten Ausführungsart wird in der beschriebenen Weise mehrfach ein definiertes Dosiervolumen aus dem länglichen Hohlkörper in verschiedene Zielgefäße abgegeben.

Gemäß einer weiteren Ausführungsart werden in den länglichen Hohlkörper mehrere definierte Dosiervolumen und zwischen den definierten Dosiervolumen Luftpolster eingesogen. Die Abgabe der definierten Dosiervolumen erfolgt wie vorstehend beim Dispensieren, wobei nach der Abgabe jedes definierten Dosiervolumens ein Luftpolster ausgeblasen wird. Hierdurch wird das Verfahren für das Diluieren verwendet.

Gemäß einer weiteren Ausführungsart wird nach Abgabe des definierten Dosiervolumens der längliche Hohlkörper aus dem Zielgefäß entnommen, danach der längliche Hohlkörper zu einem anderen Zielgefäß hin verlagert und der Tropfen am unteren Ende des länglichen Hohlkörpers ausgebildet, wenn sich der längliche Hohlkörper näher am anderen Zielgefäß als am Zielgefäß befindet. Hierdurch werden die Verdunstung von erster Flüssigkeit und das Risiko des Verlustes des Tropfens beim Transport vom Zielgefäß zum anderen Zielgefäß vermindert. Zu diesem Zwecke wird gemäß einer weiteren Ausführungsart nach dem Herausziehen des länglichen Hohlkörpers aus dem Zielgefäß und vor dem Verlagern zu einem anderen Zielgefäß die erste Flüssigkeit in den länglichen Hohlkörper zurückgezogen.

Gemäß einer weiteren Ausführungsart wird der längliche Hohlkörper über das Zielgefäß oder das andere Zielgefäß verlagert und dann der Tropfen am unteren Ende des länglichen Hohlkörpers gebildet. Durch Ausbildung des Tropfens erst nach Anordnung des länglichen Hohlkörpers über dem Zielgefäß werden die Verdunstung und das Risiko des Tropfenverlustes weiter herabgesetzt.

Gemäß einer weiteren Ausführungsart ruht der längliche Hohlkörper während der Ausbildung des Tropfens oder wird der längliche Hohlkörper während der Ausbildung des Tropfens zur zweiten Flüssigkeit im Zielgefäß hin verlagert. Hierdurch kann die Ausbildung des Tropfens unmittelbar vor dem Eintauchen in die zweite Flüssigkeit erfolgen, wodurch die Verdunstung und das Risiko des Verlustes des Tropfens beim Transport weiter herabgesetzt wird.

Gemäß einer weiteren Ausführungsart wird der Tropfen und das untere Ende des länglichen Hohlkörpers in die zweite Flüssigkeit im Zielgefäß oder im anderen Zielgefäß eingetaucht und danach das definierte Dosiervolumen abgegeben. Hierdurch wird der Einfluss von Grenzflächeneffekten auf die Abgabe des Dosiervolumens weiter herabgesetzt. Dies ermöglicht besonders kleine Dosiervolumen und eine besonders hohe Präzision der Dosierung.

Gemäß einer weiteren Ausführungsart beträgt das Kontaktierungsvolumen im Bereich von 0,5 bis 0,001 µl, vorzugsweise 0,2 bis 0,05 µl, vorzugsweise 0,1 µl.

Gemäß einer weiteren Ausführungsart ist der Tropfen mit dem Kontaktierungsvolumen eine Kugel oder ein Kugelsegment, wobei das Kugelsegment kleiner als eine Halbkugel ist, so groß wie eine Halbkugel ist oder größer als eine Halbkugel ist. Bei der Erfindung kann der Tropfen aber auch eine andere Form als die ideale Form einer Kugel oder eines Kugelsegments oder einer Halbkugel aufweisen. Die Tropfenform hängt insbesondere von Materialeigenschaften des länglichen Hohlkörpers und von den verwendeten Flüssigkeiten ab.

Gemäß einer weiteren Ausführungsart beträgt das definierte Dosiervolumen 0,01 bis 100 µl, vorzugsweise 0,1 bis 1 µl, vorzugsweise 0,2 bis 0,5 µl. Die Erfindung ist sowohl im Bereich herkömmlicherweise beherrschter Dosiervolumen als auch unterhalb des herkömmlichen Bereichs beherrschter Dosiervolumen verwendbar.

Gemäß einer weiteren Ausführungsart wird der längliche Hohlkörper 0,5 bis 5 mm tief, vorzugsweise 1 bis 4 mm tief, vorzugsweise 3 mm tief in die zweite Flüssigkeit im Zielgefäß eingetaucht.

Gemäß einer weiteren Ausführungsart wird die erste Flüssigkeit in dem länglichen Hohlkörper durch Verlagern eines Luftpolsters mittels eines Kolbens in einem Zylinder oder mittels einer anderen Verdrängungseinrichtung oder durch Verlagern eines direkt in Kontakt mit der ersten Flüssigkeit stehenden Kolbens in den länglichen Hohlkörper verlagert. Gemäß diesen Ausführungsarten ist das Verfahren mittels eines Luftpolstersystems oder mittels eines Direktverdrängersystems ausführbar. Mit einem Luftpolstersystem oder einem Direktverdrängersystem kann auch ein Unterhub für die Aufnahme und das Ausblasen eines Unterhubvolumens Luft ausgeführt werden.

Bei dem Verfahren werden der längliche Hohlkörper, das Quellgefäß und das Zielgefäß relativ zueinander verlagert um den länglichen Hohlkörper in das Quellgefäß einzutauchen, daraus zu entnehmen, zum Quellgefäß hin zu verlagern, zumindest den Tropfen einzutauchen und ggf. weitere Verlagerungen vorzunehmen.

Gemäß einer bevorzugten Ausführungsart wird der längliche Hohlkörper verlagert, wobei das Quellgefäß und das Zielgefäß ruhen. Gemäß einer anderen Ausführungsart werden das Quellgefäß und das Zielgefäß verlagert, wobei der längliche Hohlkörper ruht. Gemäß einer anderen Ausführungsart wird der längliche Hohlkörper und das Quellgefäß und/oder das Zielgefäß verlagert.

Ferner wird die Aufgabe durch eine Dosiervorrichtung gemäß Anspruch 14 gelöst. Vorteilhafte Ausführungsarten der Dosiervorrichtung sind in Unteransprüchen angegeben.

Die erfindungsgemäße Dosiervorrichtung zum Kontaktieren von Flüssigkeit umfasst Mittel zum Ausführen des Verfahrens nach einem der Ansprüche 1 bis 13.

Die Mittel zum Ausführen des Verfahrens sind insbesondere eine erste Halteeinrichtung zum Halten mindestens eines länglichen Hohlkörpers (z.B. ein Ansatz zum Aufklemmen einer Pipettenspitze), eine Verdrängungseinrichtung für Flüssigkeit (z.B. ein Kolben in einem Zylinder), ein elektromotorischer Antrieb zum Antreiben der Verdrängungseinrichtung (z.B. des Kolbens in dem Zylinder), eine elektrische Steuerungseinrichtung (z.B. ein Mikrorechner) und eine elektrische Energieversorgung (elektrische Spannungsversorgung). Gemäß einer weiteren Ausführungsart ist die elektrische Steuerungseinrichtung so programmiert, dass sie den elektromotorischen Antrieb so steuert, dass die Verdrängungseinrichtung gemäß dem Verfahren erste Flüssigkeit in den länglichen Hohlkörper aufnehmen und aus diesem ausstoßen kann.

Gemäß einer weiteren Ausführungsart umfassen die Mittel zum Ausführen des Verfahrens einen XYZ-Roboter oder ein anderes positionierendes Gerät mit einer zweiten Halteeinrichtung zum Halten eines Dosierkopfes der Dosiervorrichtung und/oder eines Quellgefäßes und/oder eines Zielgefäßes, der mit der elektrischen Steuerungseinrichtung verbunden ist. Der Dosierkopf umfasst eine erste Halteeinrichtung und eine Verdrängungseinrichtung. Gemäß einer weiteren Ausführungsart ist die elektrische Steuerungseinrichtung so programmiert, dass sie den XYZ-Roboter oder ein anderes positionierendes Gerät so steuert, dass der Dosierkopf relativ zum Quellgefäß und zum Zielgefäß so verfahren wird, dass erste Flüssigkeit aus einem Quellgefäß aufgenommen und in ein Zielgefäß abgegeben werden kann. Gemäß einer bevorzugten Ausführungsart ist die elektrische Steuerungseinrichtung so programmiert, dass der Dosierkopf oberhalb einer Arbeitsfläche so verfahren wird, dass erste Flüssigkeit aus einem auf der Arbeitsfläche positionierten Quellgefäß aufgenommen und in ein auf der Arbeitsfläche positioniertes Zielgefäß abgegeben werden kann.

Gemäß einer weiteren Ausführungsart ist die Dosiervorrichtung eine elektrisch oder manuell angetriebene Handdosiervorrichtung, ein Dosierautomat oder ein Laborautomat, wobei sie eine Einkanal- oder eine Mehrkanaldosiervorrichtung ist.

Die Erfindung wird nachfolgend anhand der anliegenden Zeichnungen eines Ausführungsbeispiels und von Untersuchungsergebnissen näher erläutert. In den Zeichnungen zeigen:
- Fig. 1: Pipettenspitze mit Kontaktierungsvolumen oberhalb einer Mikrotiterplatte in einer Seitenansicht;
- Fig. 2: vergrößertes Detail der Pipettenspitze gemäß Fig. 1;
- Fig. 3: weiter vergrößertes Detail der Pipettenspitze von Fig. 1 im Schnitt;
- Fig. 4: Pipettenspitze beim Eintauchen in ein Zielgefäß bei einer herkömmlichen Kontaktdosierung;
- Fig. 5: vergrößertes Detail der Pipettenspitze von Fig. 4;
- Fig. 6: Kolbenverlagerung und Verlagerung der Pipettenspitze über der Zeit bei der Aufnahme erster Flüssigkeit aus einem Quellgefäß beim Kontaktdispensieren mit Kontaktierungsvolumen in einem Diagramm;
- Fig. 7: Kolbenverlagerung und Verlagerung der Pipettenspitze über der Zeit bei der Abgabe erster Flüssigkeit in ein Zielgefäß beim Kontaktdispensieren mit Kontaktierungsvolumen in einem Diagramm;
- Fig. 8: Kolbenverlagerung und Verlagerung der Pipettenspitze über der Zeit bei der Abgabe eines Restabgabevolumens in ein Quellgefäß beim Kontaktdispensieren mit Kontaktierungsvolumen in einem Diagramm;
- Fig. 9: Kolbenverlagerung und Verlagerung der Pipettenspitze über der Zeit bei der Aufnahme von erster Flüssigkeit aus einem Quellgefäß beim Kontaktpipettieren mit Kontaktierungsvolumen in einem Diagramm;

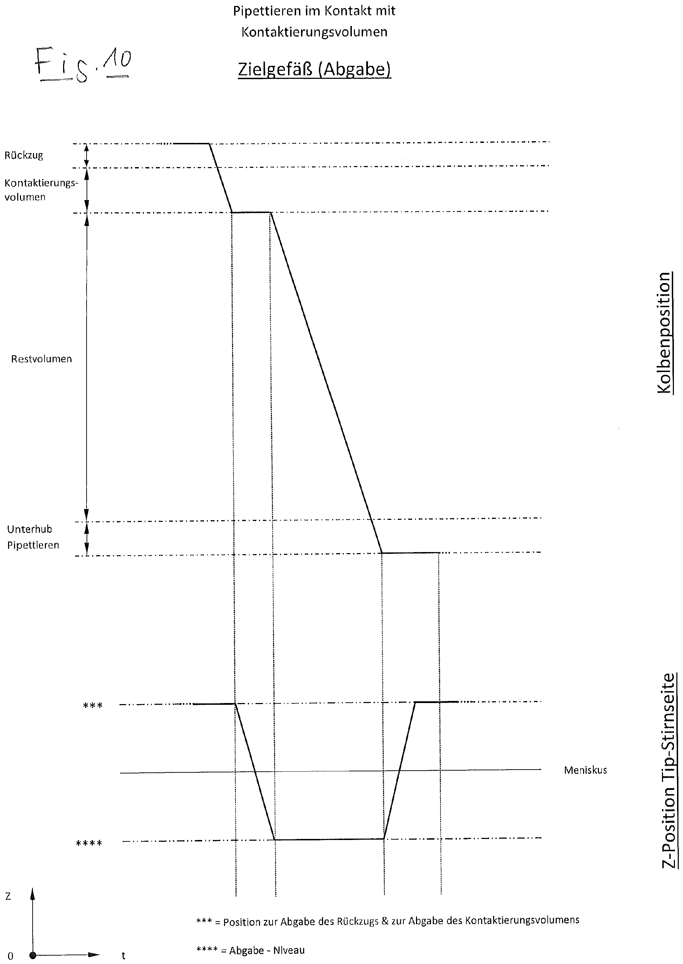

- Fig. 10: Kolbenverlagerung und Verlagerung der Pipettenspitze über der Zeit bei der Abgabe erster Flüssigkeit in ein Zielgefäß bei der Kontaktpipettierung mit Kontaktierungsvolumen in einem Diagramm;
- Fig. 11: abgegebenes Dosiervolumen in aufeinanderfolgenden Dosierschritten beim Kontaktdispensieren mit und ohne Kontaktierungsvolumen in einem Diagramm;
- Fig. 12: abgegebenes Dosiervolumen in aufeinanderfolgenden Dosierschritten beim Kontaktdispensieren mit und ohne Kontaktierungsvolumen in einem Diagramm;
- Fig. 13: abgegebenes Dosiervolumen in aufeinanderfolgenden Dosierschritten beim Kontaktdispensieren mit Kontaktierungsvolumen für zwei verschiedene Sollvolumen in einem Diagramm:

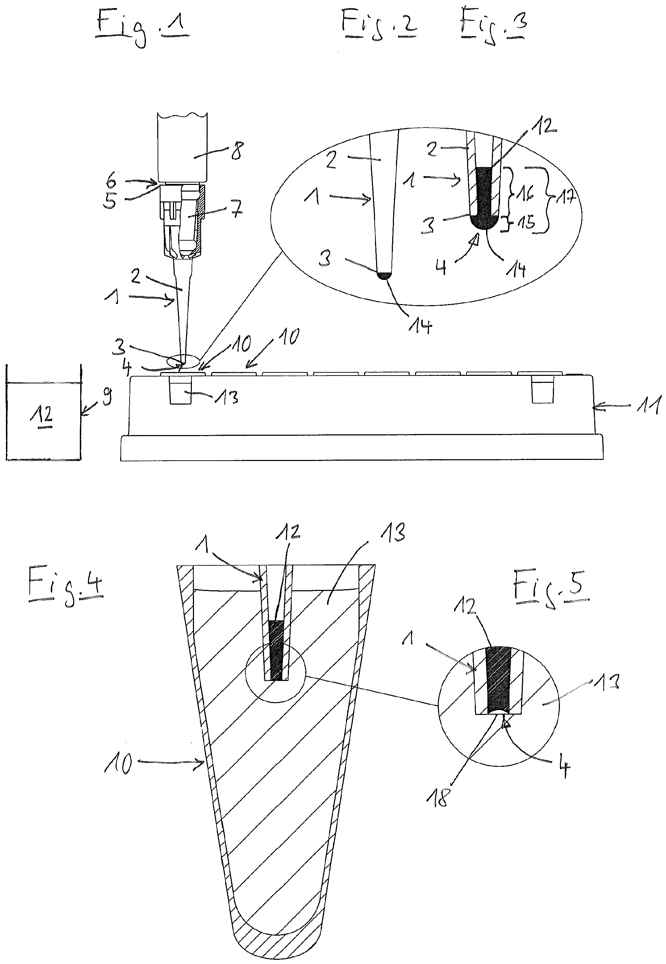

Gemäß Fig. 1 bis 3 verwendet das erfindungsgemäße Verfahren eine Pipettenspitze 1 aus Kunststoff. Hierbei handelt es sich um ein im Wesentlichen konisches und/oder zylindrisches Röhrchen 2, das am unteren Ende 3 eine untere Öffnung 4 und am oberen Ende 5 eine obere Öffnung 6 aufweist, deren Durchmesser vorzugsweise größer als der Durchmesser der kleinen Öffnung 4 ist. Die Pipettenspitze 1 ist auf einen konischen und/oder zylindrischen Ansatz 7 einer Dosiervorrichtung 8 aufgeklemmt. Die Pipettenspitze 1 ist teilweise geschnitten, um dies zu zeigen. Im Beispiel handelt es sich um eine Einkanaldosiervorrichtung.

Die Dosiervorrichtung 8 umfasst eine Verdrängungseinrichtung, die über einen Kanal innerhalb der Dosiervorrichtung mit einem Loch am unteren Ende des Ansatzes 7 verbunden ist.

Ferner verwendet das Verfahren ein Quellgefäß 9 und ein Zielgefäß 10. Das Quellgefäß 9 ist im Beispiel ein Reservoir. Das Zielgefäß 10 ist eine Vertiefung einer Mikrotiterplatte 11, deren andere Vertiefungen andere Zielgefäße bilden.

Das Quellgefäß 9 ist mit erster Flüssigkeit 12 befüllt und im Zielgefäß 10 befindet sich zweite Flüssigkeit 13.

Bei dem Verfahren wird die Pipettenspitze 1 in die erste Flüssigkeit 12 im Quellgefäß 9 eingetaucht und dann mittels der Verdrängungseinrichtung der Dosiervorrichtung erste Flüssigkeit in die Pipettenspitze 1 eingesogen.

In die Pipettenspitze 1 wird eine Menge erster Flüssigkeit eingesogen, die mindestens ein definiertes Dosiervolumen, ein Umkehrhubvolumen und ein Restabgabevolumen umfasst.

Danach wird die Pipettenspitze 1 mittels der Dosiervorrichtung 8 vertikal nach oben aus dem Quellgefäß 9 herausgezogen und horizontal verfahren, bis sie vertikal über einem Zielgefäß 10 angeordnet ist. Danach wird die Pipettenspitze 1 mittels der Dosiervorrichtung 8 abgesenkt, bis ihre untere Öffnung 4 kurz über der zweiten Flüssigkeit 13 im Zielgefäß 10 angeordnet ist.

In dieser Position wird die Pipettenspitze 1 kurz angehalten und mittels der Verdrängungseinrichtung ein Teil der ersten Flüssigkeit aus der unteren Öffnung 4 der Pipettenspitze 1 herausgedrückt, sodass dieser Teil einen am unteren Ende der Pipettenspitze 1 anhängenden Tropfen 14 bildet. Dies ist in Fig. 2 und 3 gezeigt. Das Volumen des Tropfens 14 ist das Kontaktierungsvolumen 15. Ferner ist in der Pipettenspitze 1 zumindest noch ein Restvolumen 16 vorhanden, das zusammen mit dem Kontaktierungsvolumen 15 das definierte Dosiervolumen 17 bildet.

Danach wird das untere Ende 3 der Pipettenspitze 1 mit dem anhängenden Tropfen 14 in die zweite Flüssigkeit 13 eingetaucht. Die Eintauchtiefe des unteren Endes 3 der Pipettenspitze 1 beträgt beispielsweise 3 mm.

In dieser Stellung wird mittels der Verdrängungseinrichtung das Restvolumen 16 aus der Pipettenspitze 1 herausgedrückt, sodass dieses gemeinsam mit dem Kontaktierungsvolumen 15 in die zweite Flüssigkeit 13 abgegeben wird.

Danach wird die Pipettenspitze 1 mittels der Dosiervorrichtung 8 vertikal nach oben aus dem Zielgefäß 10 herausgezogen und ggf. für die Abgabe weiterer definierter Dosiervolumen 17 zu einem anderen Zielgefäß 10 der Mikrotiterplatte 11 verfahren.

Hierdurch wird eine präzise Abgabe kleiner Dosiervolumen unter 1 µl und eine präzisere Abgabe von Dosiervolumen von 1 µl und darüber ermöglicht.

Bei der herkömmlichen Kontaktdosierung ohne Kontaktierungsvolumen verbleibt anscheinend beim Eintauchen der befüllten Pipettenspitze in die zweite Flüssigkeit im Zielgefäß eine kleine Blase 18 am unteren Ende 3 der Pipettenspitze 1 und setzt sich vor die untere Öffnung 4. Dies ist in Fig. 4 und 5 gezeigt. Grenzflächeneffekte zwischen der ersten Flüssigkeit 12 in der Pipettenspitze 1, der Luft in der Blase 18 und der zweiten Flüssigkeit 13 im Zielgefäß 10 wirken einer präzisen Abgabe des definierten Dosiervolumens entgegen.

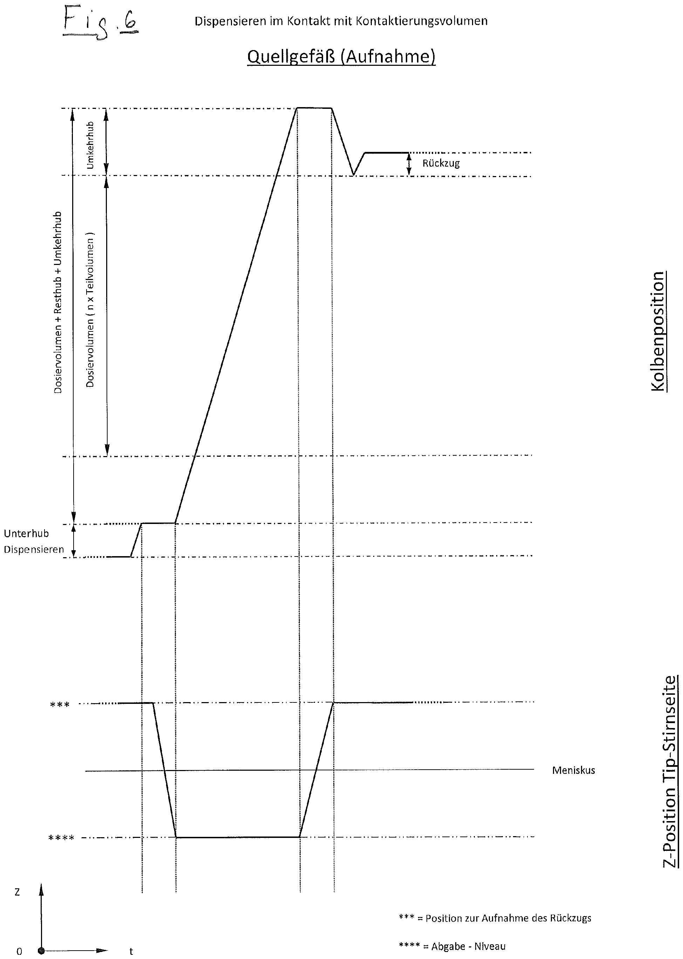

Gemäß Fig. 6 wird beim Kontaktdispensieren mit Kontaktierungsvolumen zunächst ein Unterhubvolumen aus Luft eingesogen, wenn die Pipettenspitze noch nicht in die erste Flüssigkeit eingetaucht ist. Nach dem Eintauchen der Pipettenspitze wird der Kolben der Verdrängungseinrichtung verlagert, sodass die Pipettenspitze ein gesamtes Dosiervolumen umfassend eine Anzahl von n definierten Dosiervolumen, ein Resthubvolumen und ein Umkehrhubvolumen aufnimmt. Da die Pipettenspitze in die erste Flüssigkeit im Quellgefäß eintaucht, ist sie unterhalb des Meniskus an der Oberseite der ersten Flüssigkeit angeordnet.

Danach ruht der Kolben und die Pipettenspitze wird aus der ersten Flüssigkeit herausgezogen.

Wenn sich die Pipettenspitze oberhalb des Meniskus befindet, wird der Kolben nach unten verlagert, wodurch ein Umkehrhub ausgeführt wird. Hierbei wird ein Umkehrhubvolumen in Freistrahl in das Quellgefäß abgegeben.

Optional kann der Kolben um einen den Umkehrhub unterschreitenden Rückzug zurückgezogen werden, um die erste Flüssigkeit in die Pipettenspitze hineinzuziehen.

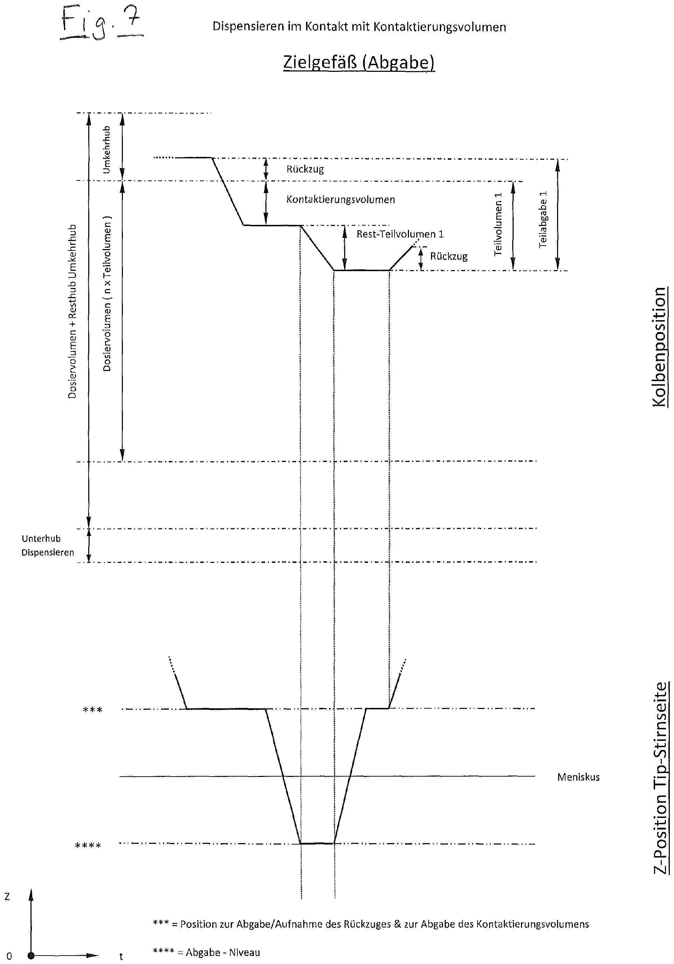

Die solchermaßen befüllte Pipettenspitze wird zum Zielgefäß verlagert. Gemäß Fig. 7 wird die Pipettenspitze ein Stück oberhalb des Meniskus der zweiten Flüssigkeit im Zielgefäß angehalten und danach der Kolben der Verdrängungseinrichtung so verlagert, dass ein ggf. erfolgter Rückzug rückgängig gemacht wird und erste Flüssigkeit unten aus der Pipettenspitze herausgedrückt wird. Die Menge der herausgedrückten Flüssigkeit entspricht einem definierten Kontaktierungsvolumen. Das Kontaktierungsvolumen hängt am unteren Ende der Pipettenspitze an.

Danach wird das untere Ende der Pipettenspitze in die zweite Flüssigkeit im Zielgefäß eingetaucht, beispielsweise bis sich das untere Ende 3 mm unterhalb des Meniskus an der Oberfläche der zweiten Flüssigkeit befindet. Anschließend wird durch Verlagern des Kolbens ein Restvolumen der ersten Flüssigkeit aus der Pipettenspitze herausgedrückt. Infolgedessen wird ein definiertes Dosiervolumen, welches aus dem Kontaktierungsvolumen und dem Restvolumen besteht, in die zweite Flüssigkeit abgegeben.

Anschließend wird die Pipettenspitze aus der zweiten Flüssigkeit herausgezogen, bis sie sich oberhalb des Meniskus der zweiten Flüssigkeit befindet. Danach wird der Kolben ein kleines Stück zurückgezogen, um die erste Flüssigkeit in die Pipettenspitze hineinzuziehen.

Anschließend wird die Pipettenspitze zu einem anderen Zielgefäß verlagert und der in Fig. 7 gezeigte Vorgang an dem anderen Zielgefäß wiederholt.

Somit wird aus der Pipettenspitze in jedes Zielgefäß ein Teilvolumen abgegeben, das ein definiertes Dosiervolumen aufweist.

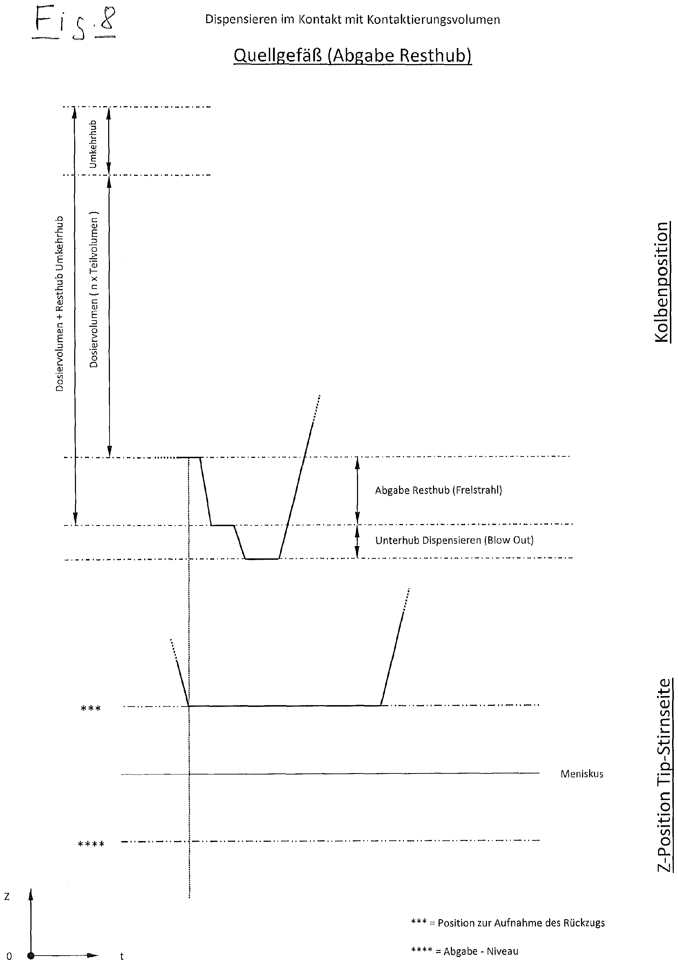

Nach Abgabe sämtlicher Teilvolumen aus der Pipettenspitze wird diese gemäß Fig. 8 zum Quellgefäß hin verlagert, sodass sich ihr unteres Ende oberhalb des Meniskus der ersten Flüssigkeit befindet. Der Kolben führt einen Resthub aus, wodurch die noch in der Pipettenspitze vorhandene Flüssigkeit im Freistrahl aus der Pipettenspitze in das Zielgefäß ausgeblasen wird. Optional kann zusätzlich durch Verlagern des Kolbens ein Unterhubvolumen (*bdow out*) ausgeblasen werden, um Restflüssigkeit aus der Pipettenspitze zu entfernen.

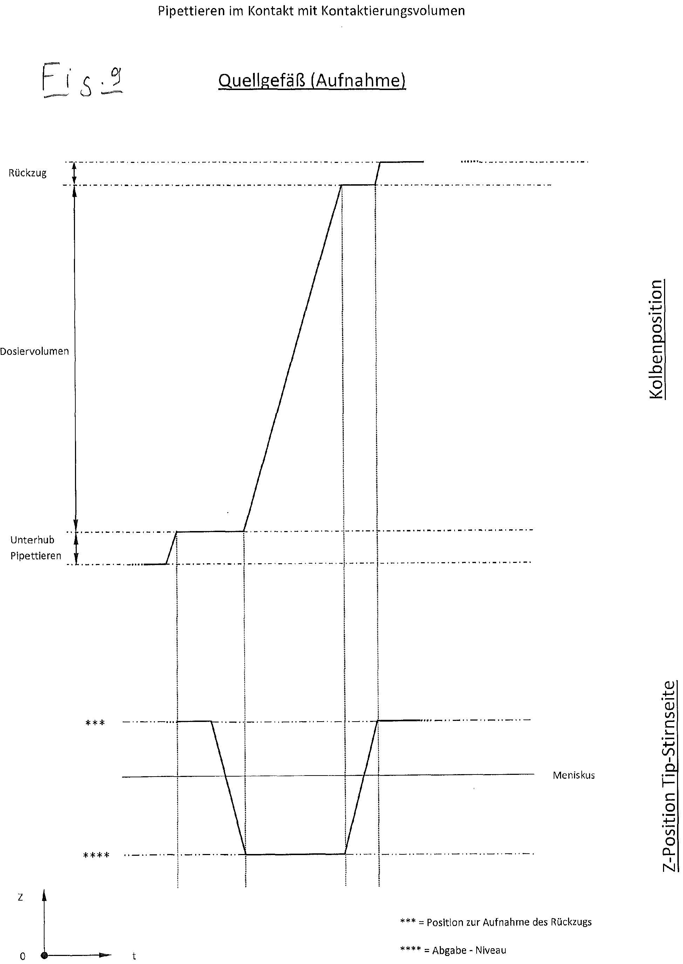

Gemäß Fig. 9 wird beim Kontaktdispensieren zunächst die Pipettenspitze in einem Abstand oberhalb des Meniskus der ersten Flüssigkeit platziert und der Kolben führt einen Unterhub aus.

Danach wird das untere Ende der Pipettenspitze in die erste Flüssigkeit eingetaucht und ein bestimmtes Dosiervolumen aufgenommen.

Wenn das Dosiervolumen aufgenommen ist, wird die Pipettenspitze aus der ersten Flüssigkeit herausgezogen und oberhalb des Meniskus angehalten. Dann wird ein Rückzug ausgeführt, wodurch die Flüssigkeit tiefer in die Pipettenspitze eingesogen wird.

Danach wird die Pipettenspitze zum Zielgefäß verfahren. Sie wird mit dem unteren Ende oberhalb des Meniskus der zweiten Flüssigkeit angehalten und der Kolben wird so verlagert, dass der Rückzug rückgängig gemacht wird und das Kontaktierungsvolumen aus dem unteren Ende der Pipettenspitze herausgedrückt wird, um einen daran anhängenden Tropfen zu bilden.

Danach wird die Pipettenspitze in die zweite Flüssigkeit eingetaucht, beispielsweise 3 mm tief. Danach wird der Kolben so verlagert, dass das Restvolumen aus der Pipettenspitze herausgedrückt wird. Hierdurch wird das gesamte abzugebende Dosiervolumen bestehend aus Kontaktierungsvolumen und Restvolumen in die zweite Flüssigkeit abgegeben. Schließlich wird bei eingetauchter Pipettenspitze der Unterhub rückgängig gemacht. Der Unterhub ist so gewählt, dass sich hierbei eine halbkugelförmige Blase am unteren Ende der Pipettenspitze bildet, welche die gesamte erste Flüssigkeit aus der Pipettenspitze verdrängt, ohne sich von der Pipettenspitze zu lösen.

Danach wird die Pipettenspitze aus der Flüssigkeit herausgezogen und die Pipettierung ist abgeschlossen.

Zum Kontaktdispensieren mit und ohne Kontaktierungsvolumen wurden Vergleichsuntersuchungen am Hauptsitz der Anmelderin in Hamburg durchgeführt. Hierfür wurde ein Laborautomat epMotion 5075 der Eppendorf AG mit drei baugleichen Einkanaldosierwerkzeugen TS-10 verwendet. Es wurden Pipettenspitzen vom Typ Eppendorf 10 µl Reload/(Standard, Art.-Nr. 0030014.545 mit einem Nennvolumen von 10 µl (Automatenspitzen) verwendet. Sowohl als erste als auch als zweite Dosierflüssigkeit wurde Wasser der Qualität 3 entsprechend DIN 8655, die sich wiederum auf DIN 3696 bezieht, verwendet. Die Untersuchungen wurden im klimatisierten Laborraum bei konstanter Temperatur und konstanter relativer Luftfeuchtigkeit durchgeführt. Für die gravimetrische Ermittlung des abgegebenen Dosiervolumens wurden Präzisionswaagen vom Typ WZS 26 HC und WZA 26 NC verwendet. Das Zielgefäß wurde auf die Präzisionswaage gesetzt. Die Pipettenspitze wurde durch eine Verdunstungsfalle hindurch in das Zielgefäß eingeführt.

Sowohl für das Kontaktdispensieren mit Kontaktierungsvolumen als auch für das Kontaktdispensieren ohne Kontaktierungsvolumen wurden mit jedem der drei Werkzeuge 10 Messreihen durchgeführt, wobei jede Messreihe neun Dosierungen umfasste, d.h. neun Dispensierschritte.

Bei den Vergleichsmessungen mit und ohne Kontaktierungsvolumen betrug das definierte abzugebende Volumen (Sollvolumen) 0,5 µl.

Bei den Ergebnissen der Messungen ohne Kontaktierungsvolumen wurden drei Grundmuster erkannt:
Im Regelfall wurde bei der ersten Dosierung einer Messreihe keine Flüssigkeit abgegeben (Nulldosierung), bei der zweiten Dosierung derselben Messreihe ein das Sollvolumen signifikant überschreitendes Dosiervolumen und bei den nachfolgenden Dosierungen derselben Messreihe das Sollvolumen geringfügig unterschreitende Dosiervolumen.

In einigen Ausnahmefällen wurde jeweils abwechselnd eine Minderabgabe (in der Regel eine Nulldosierung) und eine Mehrabgabe festgestellt, wobei das abgegebene Dosiervolumen etwa das Doppelte des Sollvolumens betrug.

Bei nur 2 Messreihen erfolgten korrekte Dosierungen, d.h. das abgegebene Dosiervolumen kam dem Sollvolumen recht nahe.

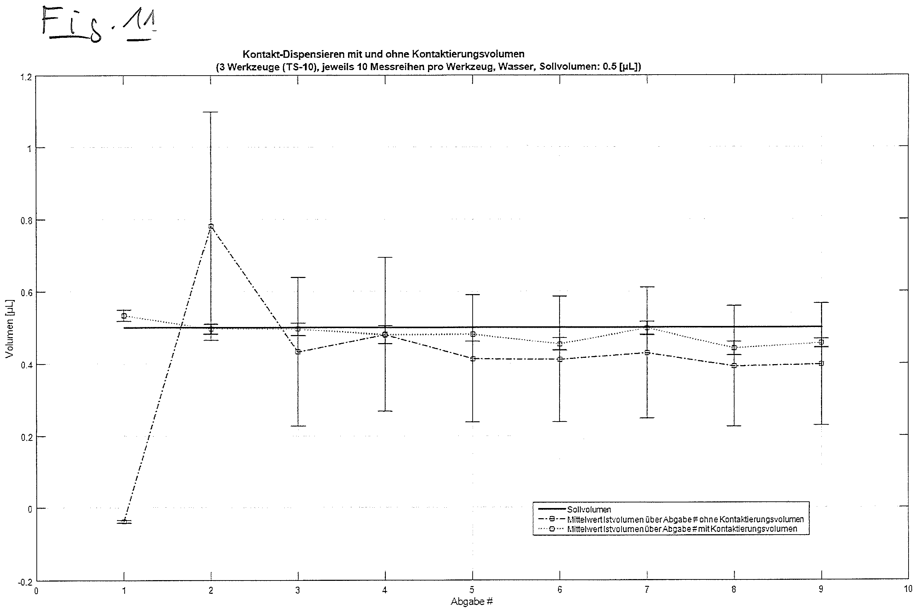

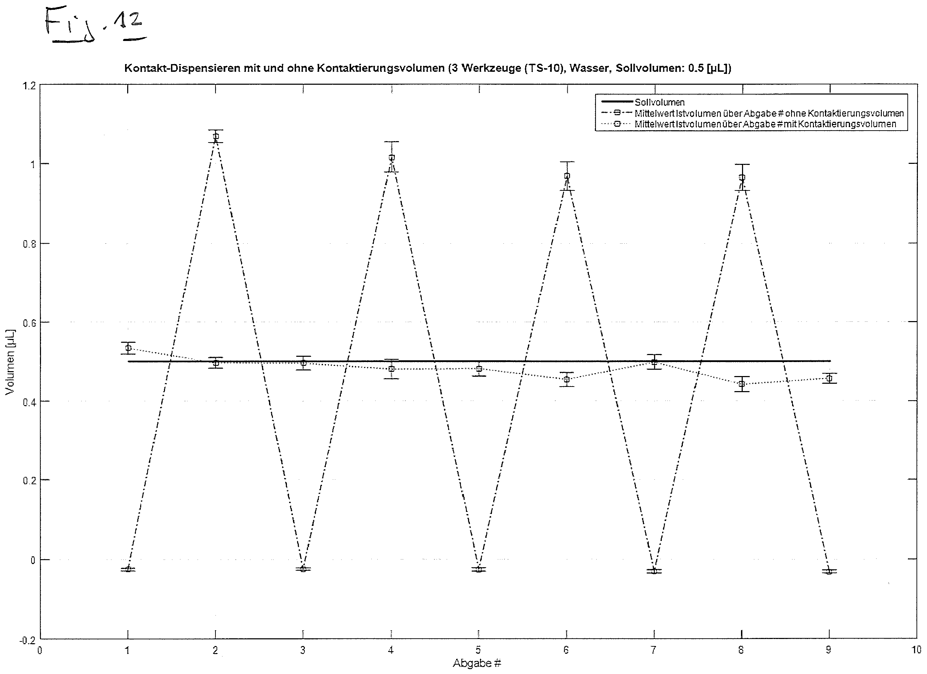

Die zum Regelfall gehörenden Messreihen sind in Fig. 11 und die zum Ausnahmefall gehörenden Messreihen sind in Fig. 12 dargestellt. In den Fig. 11 und 12 sind die Mittelwerte der Messergebnisse beim Kontaktdispensieren ohne Kontaktierungsvolumen durch strichpunktierte Linien miteinander verbunden. Ferner sind in den beiden Figuren die Mittelwerte der Messergebnisse beim Kontaktdispensieren mit Kontaktierungsvolumen durch gepunktete Linien miteinander verbunden. Zu sämtlichen Mittelwerten sind die Fehlerbalken angegeben. Das Sollvolumen von 0,5 µl ist jeweils mit einer ausgezogenen Linie markiert.

Gemäß Fig. 11 und 12 sind beim Kontaktdispensieren mit Kontaktierungsvolumen sämtliche abgegebenen Dosiervolumen präziser als beim Kontaktdispensieren ohne Kontaktierungsvolumen.

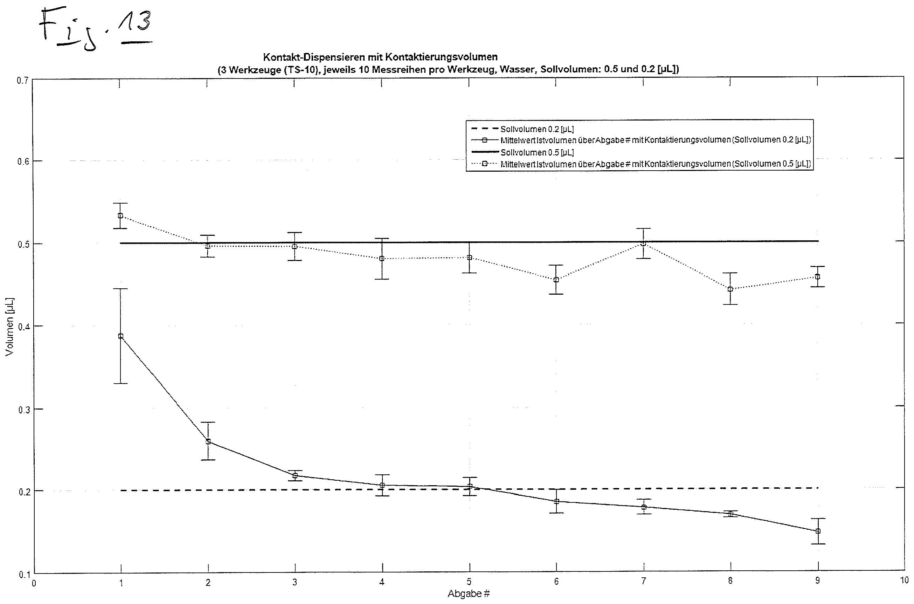

Ferner wurden beim Kontaktdispensieren mit Kontaktierungsvolumen mit den drei Werkzeugen jeweils 10 Messreihen jeweils mit einem Sollvolumen von 0,5 und 0,2 µl durchgeführt. Die Messergebnisse sind in Fig. 13 dargestellt.

Das Sollvolumen von 0,5 µl ist mit einer ausgezogenen Linie markiert. Das Sollvolumen von 0,2 µl mit einer gestrichelten Linie.

Die Mittelwerte der Messergebnisse der Messreihen bei einem Sollvolumen von 0,5 µl sind durch gepunktete Linien miteinander verbunden.

Die Mittelwerte der Messergebnisse bei der Messreihe mit 0,2 µl Sollvolumen sind durch eine ausgezogene Linie miteinander verbunden. Zu sämtlichen Mittelwerten sind die Fehlerbalken angegeben.

Demnach wurde das Sollvolumen von 0,5 µl mit einer guten Genauigkeit eingehalten.

Bei einem Sollvolumen von 0,2 µl wichen beim ersten Dosierschritt die Dosiervolumen stark und beim zweiten Dosierschritt immer noch deutlich vom Sollvolumen ab. Bei nachfolgenden Dosierschritten erfolgten hinreichend präzise Dosierungen. Dieser Befund kann beim Kontaktdispensieren dazu verwendet werden, die beiden ersten Dosierschritte zu verwerfen und die Dosiervolumen vom dritten Dosierschritt an zu verwenden.

Ferner hat ein Vergleich von Messergebnissen beim Kontaktpipettieren ohne Kontaktierungsvolumen mit Messungen beim Kontaktdispensieren jeweils mit einem Sollvolumen von 0,2 µl ergeben, dass die Messwerte der Dosierungen mit Kontaktierungsvolumen signifikant geringer streuen als die Messergebnisse der Dosierungen ohne Kontaktierungsvolumen. Somit ist auch beim Kontaktpipettieren mit Kontaktierungsvolumen eine Verbesserung der Präzision gegenüber dem Kontaktpipettieren ohne Kontaktierungsvolumen möglich.

### Bezugszeichenliste

- 1: Pipettenspitze
- 2: Röhrchen
- 3: unteres Ende
- 4: untere Öffnung
- 5: oberes Ende
- 6: obere Öffnung
- 7: Ansatz
- 8: Dosiervorrichtung
- 9: Quellgefäß
- 10: Zielgefäß
- 11: Mikrotiterplatte
- 12: erste Flüssigkeit
- 13: zweite Flüssigkeit
- 14: Tropfen
- 15: Kontaktierungsvolumen
- 16: Restvolumen
- 17: Dosiervolumen
- 18: Blase

## Patentansprüche

1. Verfahren zum Kontaktdosieren von Flüssigkeiten umfassend die folgenden Schritte:
• mindestens ein länglicher Hohlkörper wird mit seinem unteren Ende in eine erste Flüssigkeit in einem Quellgefäß eingetaucht,
• in den länglichen Hohlkörper wird erste Flüssigkeit eingesogen, wobei das Volumen der eingesogenen ersten Flüssigkeit mindestens ein definiertes Dosiervolumen umfasst,
• der längliche Hohlkörper mit der darin enthaltenen ersten Flüssigkeit wird aus dem Quellgefäß entnommen,
• ein Teil der in den länglichen Hohlkörper enthaltenen ersten Flüssigkeit wird als Kontaktierungsvolumen aus dem unteren Ende des länglichen Hohlkörpers herausgedrückt, sodass das Kontaktierungsvolumen einen am unteren Ende des länglichen Hohlkörpers anhängenden Tropfen bildet,
• zumindest ein Teil des Tropfens wird in eine zweite Flüssigkeit in einem Zielgefäß eingetaucht und
• das definierte Dosiervolumen bestehend aus dem Kontaktierungsvolumen und einem in dem länglichen Hohlkörper enthaltenen Restvolumen wird in die zweite Flüssigkeit abgegeben.

2. Verfahren nach Anspruch 1, bei dem in den länglichen Hohlkörper erste Flüssigkeit eingesogen wird, welche mindestens ein definiertes Dosiervolumen, ein Umkehrhubvolumen und ein Restabgabevolumen umfasst.

3. Verfahren nach Anspruch 1 oder 2, bei dem in den länglichen Hohlkörper vor dem Einsaugen erster Flüssigkeit und wenn sich sein unteres Ende noch nicht in der ersten Flüssigkeit befindet ein Unterhubvolumen an Luft eingesogen und nach dem Abgeben des Dosiervolumens in die zweite Flüssigkeit durch Ausblasen des Unterhubvolumens an Luft restliche erste Flüssigkeit aus dem länglichen Hohlkörper entfernt wird.

4. Verfahren nach einem der Ansprüche 1 bis 3, bei dem der längliche Hohlkörper nach der Aufnahme der ersten Flüssigkeit vom Quellgefäß weg zum Zielgefäß hin verlagert wird und der Tropfen am unteren Ende des länglichen Hohlkörpers gebildet wird, wenn sich der längliche Hohlkörper näher am Zielgefäß als am Quellgefäß befindet.

5. Verfahren nach einem der Ansprüche 1 bis 4, bei dem nach dem Herausziehen des länglichen Hohlkörpers aus dem Quellgefäß die erste Flüssigkeit in den länglichen Hohlkörper zurückgezogen wird und danach der Tropfen am unteren Ende des länglichen Hohlkörpers gebildet wird.

6. Verfahren nach einem der Ansprüche 1 bis 5, bei dem nach der Abgabe des definierten Dosiervolumens der länglichen Hohlkörper aus dem Zielgefäß herausgezogen wird, ein Tropfen mit dem Kontaktierungsvolumen am unteren Ende des länglichen Hohlkörpers gebildet wird, zumindest ein Teil des Tropfens in eine zweite Flüssigkeit in einem anderen Zielgefäß eingetaucht wird und das definierte Dosiervolumen bestehend aus dem Kontaktierungsvolumen und einem in den länglichen Hohlkörper vorhandenen Restvolumen in die zweite Flüssigkeit im anderen Zielgefäß abgegeben wird und ggf. die vorstehenden Schritte wiederholt werden.

7. Verfahren nach Anspruch 6, bei dem nach der Abgabe des definierten Dosiervolumens der längliche Hohlkörper aus dem Zielgefäß herausgezogen wird, danach vorzugsweise die erste Flüssigkeit in dem länglichen Hohlkörper zurückgezogen wird, der längliche Hohlkörper zu einem weiteren Zielgefäß hin verlagert wird und der Tropfen am unteren Ende des länglichen Hohlkörpers ausgebildet wird, wenn sich der längliche Hohlkörper näher am weiteren Zielgefäß als am Zielgefäß befindet.

8. Verfahren nach einem der Ansprüche 1 bis 7, bei dem der längliche Hohlkörper über das Zielgefäß verlagert wird und dann der Tropfen am unteren Ende des länglichen Hohlkörpers gebildet wird.

9. Verfahren nach einem der Ansprüche 1 bis 8, bei dem während der Ausbildung des Tropfens des länglichen Hohlkörpers ruht oder zur zweiten Flüssigkeit im Zielgefäß hin verlagert wird.

10. Verfahren nach einem der Ansprüche 1 bis 9, bei dem der Tropfen und das untere Ende des länglichen Hohlkörpers in die zweite Flüssigkeit im Zielgefäß eingetaucht und danach das definierte Dosiervolumen abgegeben wird.

11. Verfahren nach einem der Ansprüche 1 bis 10, bei dem das Kontaktierungsvolumen im Bereich von 0,5 bis 0,001 µl, vorzugsweise 0,2 bis 0,05 µl, vorzugsweise 0,1 µl beträgt und/oder bei dem das definierte Dosiervolumen 0,05 bis 100 µl, vorzugsweise 0,1 bis 1 µl, vorzugsweise 0,2 bis 0,5 µl beträgt.

12. Verfahren nach einem der Ansprüche 1 bis 11, bei dem der Tropfen mit dem Kontaktierungsvolumen eine Kugel oder ein Kugelsegment ist, wobei das Kugelsegment kleiner als eine Halbkugel ist, so groß wie eine Halbkugel oder größer als eine Halbkugel ist.

13. Verfahren nach einem der Ansprüche 1 bis 12, bei dem die erste Flüssigkeit in den länglichen Hohlkörper durch Verlagern eines Luftpolsters mittels eines Kolbens in einen Zylinder oder mittels einer anderen Verdrängungsvorrichtung oder durch Verlagern eines direkt in Kontakt mit der ersten Flüssigkeit stehenden Kolbens in dem länglichen Hohlkörper verlagerbar ist.

14. Dosiervorrichtung zum Kontaktdosieren von Flüssigkeiten, die Mittel zum Ausführen des Verfahrens nach einem der Ansprüche 1 bis 13 umfasst.

15. Dosiervorrichtung nach Anspruch 14, die eine elektrisch oder manuell angetriebene Handdosiervorrichtung, ein Dosierautomat oder ein Laborautomat ist, wobei die Dosiervorrichtung eine Einkanal- oder eine Mehrkanaldosiervorrichtung ist.
